Europäisches Patentamt

European Patent Office

Office européen des brevets

(11) Publication number: **0 061 306**
**B1**

## (12) EUROPEAN PATENT SPECIFICATION

(45) Date of publication of patent specification: **26.02.86**

(21) Application number: **82301392.5**

(22) Date of filing: **18.03.82**

(51) Int. Cl.⁴: **B 60 C 27/06,** B 60 C 27/08

(54) Cable type tire chains.

(30) Priority: **23.03.81 US 246362**
**23.03.81 US 246363**

(43) Date of publication of application:
**29.09.82 Bulletin 82/39**

(45) Publication of the grant of the patent:
**26.02.86 Bulletin 86/09**

(84) Designated Contracting States:
**AT BE CH DE FR·GB IT LI LU NL SE**

(56) References cited:
**FR-A- 466 155**
**FR-A-1 181 725**
**FR-A-2 160 340**
**GB-A- 753 016**
**US-A-1 644 077**
**US-A-1 644 627**
**US-A-2 078 764**
**US-A-2 514 243**

(73) Proprietor: **BURNS BROS., INC.**
**621 S.E. Union·Avenue**
**Portland Oregon 97214 (US)**

(72) Inventor: **Coutts, James Walter**
**7 Platt Street**
**Swanton Vermont 05488 (US)**
Inventor: **Martinelli, Rene Joseph**
**1905 Hill House Drive**
**West Linn Oregon 97068 (US)**

(74) Representative: **Rowe, Eric Nielsen et al**
**Edward Evans & Co. Chancery House 53-64**
**Chancery Lane**
**London WC2A 1SD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to cable-type chains for use on vehicle tires, for improving traction, for example, in ice or snow conditions. In particular, the invention is concerned with cable-type chains which include a pair of elongate flexible side members adapted to extend circumferentially around opposite side walls of a tire, and cross members provided with traction means such as traction sleeves, the cross members being connected between the side members so as to extend over and across the tire tread. Chains of this general type are well known; see, for example, U.S. Patent No. 4,155,389.

It is desirable in the design of cable-type tire chains, to maximize traction, vehicle stability and chain life, consistent with minimizing wear both of the tire and of the chain itself. The present invention is directed, inter alia, toward aspects of cable-type tire chain design adapted to provide the tire chain with favorable characteristics in the above or other respects.

For example, it may be desirable to provide attachment means between the ends of the cross members and the respective side members which are simple and economical to manufacture and apply, and which provide a relatively low profile connection between the cross members and side members, which is useful, for example, in vehicle wheel wells having limited clearance. It is further desirable, for such attachment means to provide a secure connection while facilitating cross member replacement, and preferably the attachment means should allow for a degree of movement (hinging movement being preferred), as between the cross member ends and the side members, in order to accommodate changes in tire profile and/or limited circumferential movement of the cross member. The present invention is directed, inter alia, towards providing a cable-type tire chain having attachment means adapted to fulfill the above criteria.

According to the invention there is provided a cable-type tire chain having a pair of elongate side members, a cross member connected between the side members, the cross member being provided with traction means, and attachment means between the ends of the cross member and the respective side members, each attachment means comprising complementary connector elements secured to the cross member and side member respectively, (see US—A—1644627), characterized in that one of said elements includes a head and the other element comprises a plate having a bent-over tab flattened toward the body of the plate and an opening formed through the plate and through which the opening head is inserted from one side of the plate to the other, the head being trapped between the tab and the body of the plate by the flattened tab, and the configuration of the connector elements permitting relative movement therebetween when the head is trapped as aforesaid.

According to another aspect of the invention there is provided a cross member for a cable-type tire chain, the cross member being a cable provided with traction sleeves and having at its opposite ends attachment means for connecting the cross member to side members of the cable chain (see GB—A—753016), characterized in that the attachment means includes, in each case, a connector element fixed to the end of the cross member and having a head adapted to be received in a complementary connector element attached to one of the side members in a manner permitting movement of the cross member relative to the side member, and in that each complementary connector element comprises a plate having means at one end for fixing the plate firmly to the side member and a bent-over tab at the other end having an opening through which the head is inserted from one side of the plate to the other, the tab being flattened toward the body of said plate and trapping the head in the connector element.

Relative movement may be, for example, by hinging movement in directions both laterally and circumferentially of a tire. The head is preferably formed on the connector element secured to the cross member, and the plate and tab on the other connector element, but certain advantages are retained if the configuration is reversed. In one preferred form, the head may comprise a substantially flat, T-shaped member having a cross bar extending transversely to the longitudinal axis of the cross member. In another form the head may have a curved outer surface which permits rotation of the cross member about its longitudinal axis relative to the connector element in which it is received.

Additional features of the invention will be apparent from the dependent claims. An example of the invention could be seen from the ensuing description in conjunction with the accompanying drawings.

Brief description of the drawings

Figure 1 is a perspective view of a vehicle tire equipped with a first form of tire chain constructed in accordance with the invention;

Figure 2 is an enlarged sectional view on line 2—2 of Figure 1;

Figure 3 is an exploded perspective view of parts of the tire chain shown in Figure 1, including a cross member and a connector element;

Figure 4 is a side elevational view of a traction sleeve;

Figure 5 is an enlarged sectional view on line 5—5 of Figure 3;

Figure 6 is an enlarged sectional view of line 6—6 of Figure 3;

Figure 7 is a perspective view of a vehicle tire equipped with a second form of tire chain constructed in accordance with the invention;

Figure 8 is an enlarged sectional view on line 8—8 of Figure 7; and

Figure 9 is an exploded perspective view of parts of the tire chain shown in Figure 7, including a cross member and connector elements.

### Description of preferred embodiments

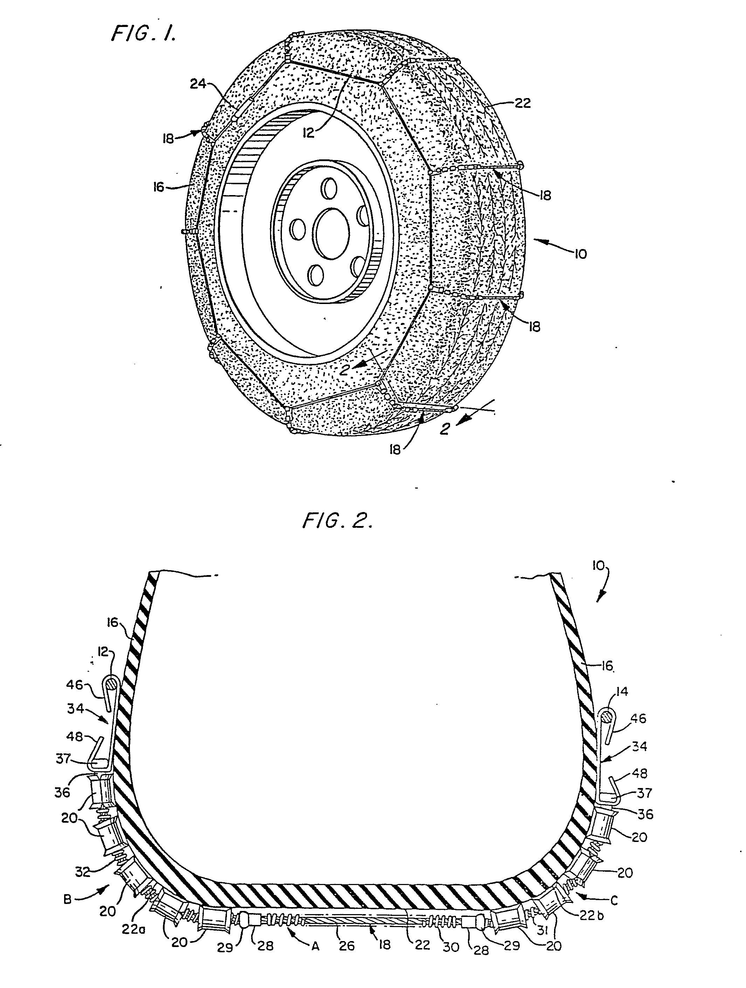

As shown in Figures 1 and 2, a vehicle tire 10 is provided with a first form of cable-type tire chain in accordance with the invention comprising elongate flexible side members 12 and 14 (only one side member 12 is visible in Figure 1), which extend circumferentially around opposite side walls 16 of the tire, and cross members 18, carrying traction means in the form of traction sleeves 20, the cross members being connected between the side members and extending over and across the tire tread 22. The opposite ends of the respective side members 12 and 14 may be connected together, in known manner, by any suitable connector 24 (Figure 1), so that the cable chain securely embraces the tire. Side members 12 and 14 may, for example, comprise stranded metal cable or other suitable elongate flexible material.

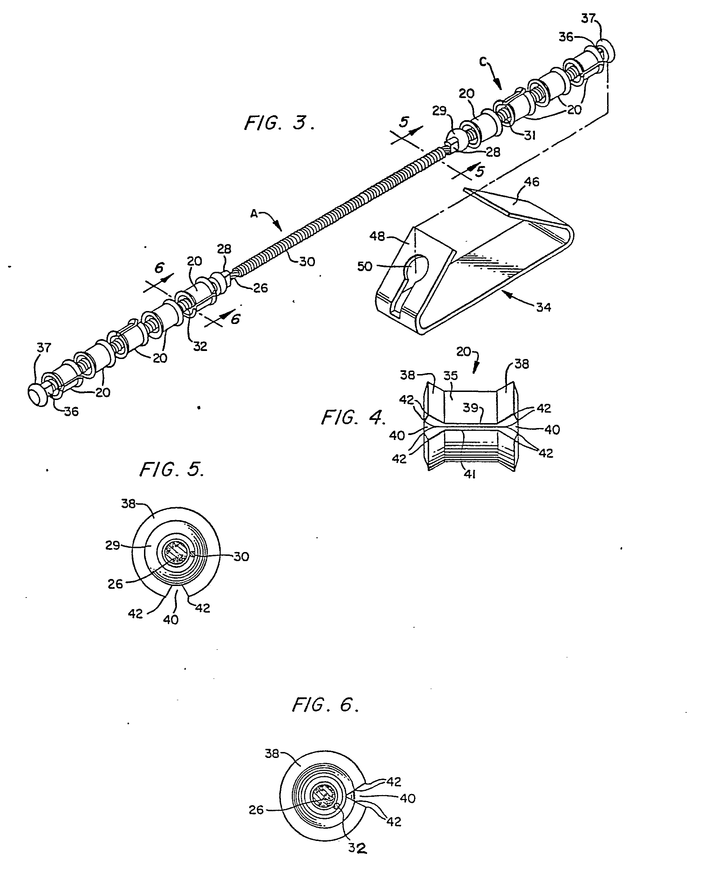

Each of the cross members 18, see particularly Figures 2 and 3, comprises a length of cable 26 (such as stranded-metal aircraft cable) divided, by bushings 28 crimped to the cable, into a central section A and outer sections B and C. A wire is helically wound around central section A so as to provide an elongate sheath 30 extending substantially the entire length of the central section. The diameter of the sheath is such that it can rotate freely on the cable 26. Outer sections B and C are likewise provided with freely rotatably helically wound elongate wire sheaths 32 and 31. Each end of the cross member has a connector element in the form of a further crimped-on bushing 36 with a part-spherical head 37. Each of the cable sections B and C carries a number of the traction sleeves 20, over the respective sheaths 32 and 34, the diameter of the sleeves 20 and the number of sleeves being such that they are freely rotatable.

The traction sleeves (see Figure 4) each have a body portion 35 in the form of a right cylinder and outwardly flared end portions 38. The end portions define V-shaped notches 40 providing sharp corners 42 at the opposite ends of the sleeve for biting into ice, snow or the like. Bushings 28 have part-spherical heads 29, which may be received in the flared ends of the innermost sleeves and provide bearing surfaces which facilitate sleeve rotation. Conveniently, the sleeves may each be formed by bending (in a suitable die or the like) an initially flat strip of metal into tubular form with flared end portions and so that opposite edges 39, 41 of the strip are juxtaposed in the body portion of the sleeve in parallel to the sleeve axis. With this procedure, the flaring of the end portions in itself may form the V-shaped notches 40, which are defined between the end sections of edges 39 and 41.

It will be noted that the lengths of sections A, B and C of the cross members are such that when the tire chain is fitted to a tire, the traction sleeves are located in the vicinity of the tread shoulders 22a and 22b, with the center of the tire tread being free of sleeves. This is preferred, but not essential, and, the sleeves could be continued across the entire tread. (In this case, bushings 28 could be omitted and a single wire sheath could be used for the entire length of each cross member). Further, while in the illustrated embodiment, there are unequal numbers of traction sleeves on the respective end portions of the cross member, the actual number of sleeves used in practice may be varied to suit different applications.

The ends of the cross members 18 are connected to the side members 12 and 14 by attachment means including the bushings 36 and complementary connector elements 34 shown particularly in Figures 2 and 3. Each connector element 34 is formed from a flat metal plate having one end 46 bent to form a tab by which the element 34 is crimped firmly to the relevant side member. The other end of the element 34 is bent to form a further tab 48 having a keyhole-like opening 50, adapted to receive, through its large end, the head 37 of one of the end bushings 36 of the cross member when tab 48 is lifted away from the body of the element. The bushing 36 can then be moved down opening 50 toward the end of the element 34. When tab 48 is then flattened toward the body of the plate, head 37 becomes trapped in element 34 as shown in Figure 2, the narrow part of opening 50 being of insufficient width to permit withdrawal of head 37, and the flattening of tab 48 preventing head 37 from moving toward the large end of opening 50. The connector configuration, however, due, inter alia, to the part-spherical head 37, permits rotation of the cross member about its longitudinal axis. The cross member can be released by bending tab 48 to the position of Figure 3 (with the aid of a tool) and removing head 37 through the large end of opening 50.

The ability of the cross member cables 26 to rotate relative to the connector elements 34, along with the free rotational mounting of the wire sheaths 30—32 and of the traction sleeves, contributes significantly to reducing or at least equalizing wear on the cable chain. Additionally, the specific design of the traction sleeves imparts good lateral traction to a tire, while resisting clogging by ice chips or the like. Further, the connector elements provide a rather low-profile connection between the cross members and the side members which is useful in vehicle wheel wells having limited clearance, and the connections may also permit a degree of lateral hinging as between the side members and the ends of the cross members useful in accommodating changes in tire profile.

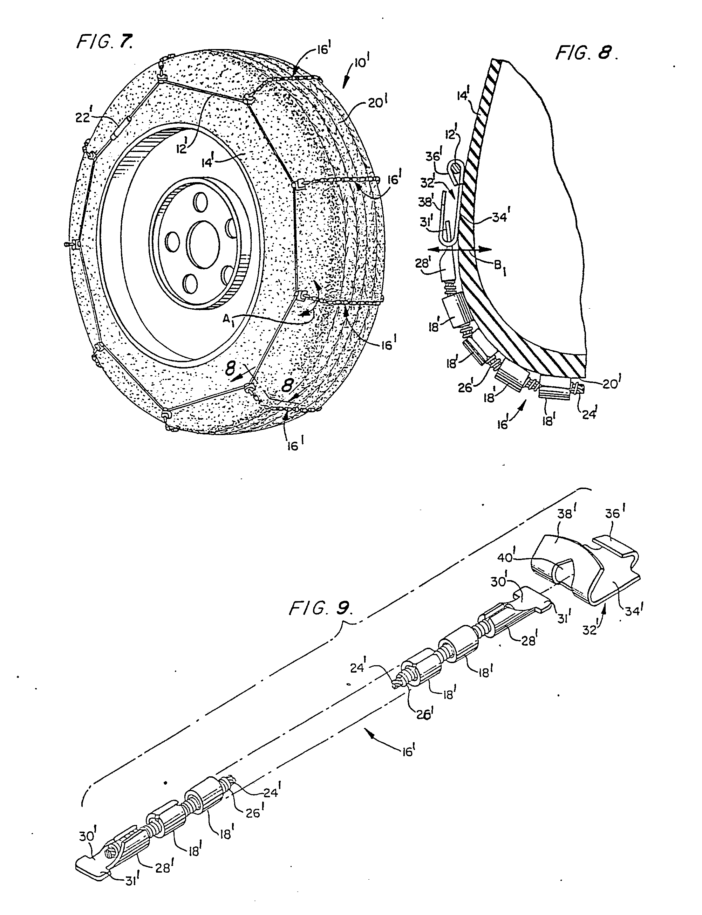

Referring now to Figures 7 and 8, a vehicle tire 10' is provided with a second form of cable-type tire chain in accordance with the invention comprising flexible elongate side members 12', which again extend circumferentially around opposite side walls 14' of the tire and cross members 16', carrying traction means in the form of traction sleeves 18', the cross members being connected between the side members and extending over and across the tire tread 20'. Only one side member 12' is visible in the drawings, but it will be appreciated that a like side member is provided on the opposite side wall of the tire. The ends of the respective side members 12' may be connected together in known manner by any suitable connector 22' (Figure 7) so that the cable chain securely embraces the tire. The side members 12' may again comprise stranded metal cable or other suitable elongate flexible material.

Each of the cross members 16', see particularly Figures 8 and 9, comprises a length of cable 24', such as stranded metal aircraft cable, covered by a sheath of wire 26' wound helically around cable 24'. The traction sleeves 18' are freely rotatably mounted over the wire sheath 26'. The design of the traction sleeves is not critical in the present embodiment, and the sleeves may, for example, be of the type shown in the aforementioned patent, or may alternatively be of the type shown in Figures 1 to 6.

The opposite ends of each cross member are each provided with a connector element in the form of a metal bushing 28' crimped onto cable 24' and having a head in the form of a substantially flat, T-shaped plate 30'. The heads 30' form part of attachment means for connecting the ends of the cross members to the respective side members, the attachment means, in each case, further including a complementary connector element 32'.

Connector elements 32' may each comprise a metal plate 34', having a bent-over tab 36' at one end, by which the element may be firmly crimped to one of the side cables, and a further bent-over tab 38' at the other end, tab 38' being formed with an elongate opening 40' extending lengthwise of the element and being tapered at one end as shown. The shape and configuration of opening 40' is such that when the tab 38' is lifted away from plate 34' (as in Figure 9), one of the heads 30' may be inserted through the opening by longitudinally orienting the crossbar 31' of the head 30' with the length of the opening. Then, when tab 38' is flattened toward the body of plate 34' (as in Figure 8), head 30' becomes trapped between the tab and the body of the plate, since the flattened tab prevents the crossbar 31' from being oriented into longitudinal alignment with the opening. In the flattened condition of tab 38', however, the relative configuration of the head, the opening, and the tab and plate body, is such that a degree of hinging may take place between the connector elements both in the plane of plate 34' and perpendicularly to the plane of plate 34'. These movements provide for a degree of hinging of the cross cable relative to the side cables circumferentially of a tire (as indicated, for example, by arrow $A_1$ in Figure 7) and laterally of the tire (as indicated, for example, by arrow $B_1$ in Figure 8). The circumferential hinging accommodates adjustment of the cross members circumferrentially of the tire, while the lateral hinging accommodates changes in the tire profile.

The cross members may be removed from connector elements 32', if required, simply by lifting the tabs 38' by means of a tool, and suitably orienting the crossbars 31' relative to the openings 40'.

It will be seen from the foregoing that the invention, at least in one aspect thereof, provides attachment means between the cross members and side members of a cable-type tire chain, which attachment means is relatively simple and economical to manufacture, which provides relatively low profile connection between the cross members and side members, and which may allow for movement such as hinging movement of a cross member relative to a side member both laterally and circumferentially of a tire. Further, the attachment means provide secure connections between the cross members and side members while allowing for simple disconnection therebetween for cross member replacement.

While only preferred embodiments of the invention have been described herein in detail, the invention is not limited thereby and modifications can be made within the scope of the attached claims.

### Claims

1. A cable-type tire chain having a pair of elongate side members (12, 14 or 12'), a cross member (18 or 16') connected between the side members, the cross member being provided with traction means (20 or 18'), and attachment means between the ends of the cross member and the respective side members, each attachment means comprising complementary connector elements (36 or 28' and 34 or 32') secured to the cross member and side member respectively, characterized in that one of said elements (36 and 28') includes a head (37 or 30') and the other element (34 or 32') comprises a plate (34 or 34') having a bent-over tab (48 or 38') flattened toward the body of the plate and an opening (50 or 40') formed through the plate and through which opening the head is inserted from one side of the plate to the other, the head being trapped between the tab and the body of the plate by the flattened tab, and the configuration of the connector elements permitting relative movement therebetween when the head is trapped as aforesaid.

2. A tire chain as defined in Claim 1, characterized in that the connector element (36 or 28') having the head (37 or 30') is secured to the cross member (18 or 16').

3. A tire chain as defined in either preceding claim, characterized in that the head (37 or 30') when trapped is adapted to permit hinging of the connector elements (34, 36 or 28', 32') laterally of a tire upon which the chain is used (arrow $B_1$).

4. A tire chain as defined in any preceding claim, characterized in that the head (30'), when trapped, is adapted to permit hinging movement of the connector elements (28', 32') circumferentially of a tire upon which the chain us used (arrow A₁).

5. A tire chain as defined in any preceding claim, characterized in that the head (30') comprises a substantially flat T-shaped member with a crossbar (31') extending substantially transversely to the longitudinal axis of the cross member (16').

6. A tire chain as defined in claim 5, characterized in that the configuration of the head (30') and the opening (40') is such as to permit insertion of the head in the opening and removal of the head from the opening by mutual lengthwise orientation of the crossbar (31') and the opening when the tab is lifted away from the body of the plate.

7. A tire chain as defined in any preceding claim, characterized in that the cross member (18 or 16') is a cable (26 or 24'), and wherein the connector element (36 or 28') which is secured to the cross member comprises a bushing crimped onto the cable.

8. A tire chain as defined in any preceding claim, characterized in that the opening (50 or 40') extends into the tab (48 or 38').

9. A tire chain as defined in any preceding claim, characterized in that the traction means (20 or 18') comprise traction sleeves on the cross member (18 or 16').

10. A tire chain as defined in claim 1, characterized in that the arrangement of the connector elements (34 and 36) permits rotation of the cross member (18) about its longitudinal axis.

11. A tire chain as defined in claim 10, characterized in that the head (37) has a curved outer surface to permit said rotation.

12. A cross member for a cable-type tire chain, the cross member (18 or 16') being a cable provided with traction sleeves (20 or 18') and having at its opposite ends attachment means (36 or 28') for connecting the cross member to side members (12, 14 or 12') of the cable chain, characterized in that the attachment means includes, in each case, a connector element (36 or 28') fixed to the end of the cross member and having a head (37 or 30') adapted to be received in a complementary connector element (34 or 32') attached to one of the side members in a manner permitting movement of the cross member relative to the side member, and in that each complementary connector element (34 or 32') comprises a plate having means (46 or 36') at one end for fixing the plate firmly to the side member and a bent-over tab (48 or 38') at the other end having an opening (50 or 40') through which the head is inserted from one side of the plate to the other, the tab being flattened toward the body of said plate and trapping the head in the connector element.

13. A cross member as defined in Claim 12, characterized in that the head (37 or 30') is adapted to be received in the complementary connector element (34 or 32') in a manner permitting relative hinging of the elements.

14. A cross member as defined in Claim 12, characterized in that the head (37) is adapted to be received in the complementary connector element (34) in a manner permitting rotation of the cross member about its longitudinal axis.

**Revendications**

1. Chaîne du type à câble pour pneumatique, comprenant une paire d'éléments latéraux allongés (12, 14 ou 12'), un élément transversal (18 ou 16') relié entre les éléments latéraux, l'élément transversal étant pourvu de moyens de traction (20 ou 18'), et des moyens d'attache entre les extrémités de l'élément transversal et les éléments latéraux respectifs, chaque moyen d'attache comprenant des éléments de liaison complémentaires (36 ou 28' et 34 ou 32') fixés respectivement à l'élément transversal et à l'élément latéral, caractérisée en ce qu'un des dits éléments (36 et 28') comporte une tête (37 ou 30') tandis que l'autre élément (34 ou 32') comprend une plaque (34 ou 34') présentant une patte repliée (48 ou 38') rabattue en direction du corps de la plaque et une ouverture (50 ou 40') percée à travers la plaque et à travers laquelle la tête est insérée d'un côté à l'autre de la plaque, la tête étant piégée entre la patte et le corps de la plaque au moyen de la patte rabattue, et la configuration des éléments de liaison permettant un mouvement relatif entre elles lorsque la tête est piégée comme indiqué ci-dessus.

2. Chaîne pour pneumatique suivant la revendication 1, caractérisée en ce que l'élément de liaison (36 ou 28') portant la tête (37 ou 30') est fixé à l'élément transversal (18 ou 16').

3. Chaîne pour pneumatique suivant l'une ou l'autre des revendications précédentes, caractérisée en ce que la tête (37 ou 30'), lorsqu'elle est piégée, est apte à permettre un balancement des éléments de liaison (34, 36 ou 28', 32') latéralement par rapport à un pneumatique sur lequel la chaîne est utilisée (flèche B₁).

4. Chaîne pour pneumatique suivant l'une ou l'autre des revendications précédentes, caractérisée en ce que la tête (30'), lorsqu'elle est piégée, est apte à permettre un mouvement de balancement des éléments de liaison (28', 32') suivant la circonférence d'un pneumatique sur lequel la chaîne est utilisée (flèche A₁).

5. Chaîne pour pneumatique suivant l'une ou l'autre des revendications précédentes, caractérisée en ce que la tête (30') comprend un élément en T sensiblement plat avec une traverse (31') s'étendant substantiellement en direction transversal par rapport à l'axe longitudinal de l'élément transversal (16').

6. Chaîne pour pneumatique suivant la revendication 5, caractérisée en ce que la configuration de la tête (30') et de l'ouverture (40') est telle qu'elle permet l'insertion de la tête dans l'ouverture et la retrait de la tête de l'ouverture en orientant la traverse (31') et l'ouverture dans le sens longitudinal l'une par rapport à l'autre lorsque la patte est soulevée du corps de la plaque.

7. Chaîne pour pneumatique suivant l'une ou l'autre des revendications précédentes, caractérisée en ce que l'élément transversal (18 ou 16') est une câble (26 ou 24'), et en ce que l'élément de liaison (36 ou 28') qui est fixé à l'élément transversal comprend une douille sertie sur le câble.

8. Chaîne pour pneumatique suivant l'une ou l'autre des revendications précédentes, caractérisée en ce que l'ouverture (50 ou 40') s'étend dans la patte (48 ou 38').

9. Chaîne pour pneumatique suivant l'une ou l'autre des revendications précédentes, caractérisée en ce que les moyens de traction (20 ou 18') comprennent des manchons de traction sur l'élément transversal (18 ou 16').

10. Chaîne pour pneumatique suivant la revendication 1, caractérisée en ce que l'agencement des éléments de liaison (34 et 36) permet la rotation de l'élément transversal (18) autour de son axe longitudinal.

11. Chaîne pour pneumatique suivant la revendication 10, caractérisée en ce que la tête (37) présente une surface extérieure incurvée pour permettre la dite rotation.

12. Elément transversal pour une chaîne du type à câble pour pneumatique, l'élément transversal (18 ou 16') étant un câble pourvu de manchons de traction (20 ou 18') et comportant à ses extrémités opposées des moyens d'attache (36 ou 28') pour relier l'élément transversal aux éléments latéraux (12, 14 ou 12') de la chaîne à câble, caractérisé en ce que le moyen d'attache comprend, dans chaque cas, un élément de liaison (36 ou 28') fixé à l'extrémité de l'élément transversal et comportant une tête (37 ou 30') apte à être insérée dans un élément de liaison (34 ou 32') complémentaire attaché à l'une des éléments latéraux d'une façon permettant le mouvement de l'élément transversal par rapport à l'élément latéral, et en ce que chaque élément de liaison (34 ou 32') complémentaire comporte une plaque présentant à une extrémité des moyens (46 ou 36') pour fixer fermement la plaque à l'élément latéral et à l'autre extrémité une patte repliée (48 ou 38') percée d'une ouverture (50 ou 40') à travers laquelle la tête est insérée d'un côté à l'autre de la plaque, la patte étant rabattue en direction du corps de la dite plaue et piégeant la tête dans l'élément de liaison.

13. Elément transversal suivant la revendication 12, caractérisé en ce que la tête (37 ou 30') est apte à être insérée dans l'élément de liaison (34 ou 32') complémentaire d'une façon permettant un mouvement de balancement relatif des éléments.

14. Elément transversal suivant la revendication 12, caractérisé en ce que la tête (37) est apte à être insérée dans l'élément de liaison (34) complémentaire d'une façon permettant la rotation de l'élément transversal autour de son axe longitudinal.

**Patentansprüche**

1. Pneukette aus Kabeln mit zwei länglichen Seitenelementen (12, 14 oder 12'), einem diese Seitenelemente verbindenden Querelement (18, 16'), wobei das Querelement mit Eingriffsmitteln (20 oder 18') versehen ist; und mit Befestigungsmitteln zwischen den Enden des Querelementes und den entsprechenden Seitenelementen, wobei jedes Befestigungsmittel komplementäre Verbindungselemente (36 oder 28' und 34 oder 32') aufweist, die am Querelement bzw. am Seitenelement befestigt sind, dadurch gekennzeichnet, dass eines dieser Elemente (36 oder 28') einen Kopf (37 oder 30') und das andere Element (34 oder 32') eine Platte (34 oder 34') mit einem umgebogenen Lappen (48 oder 38') aufweist, der gegen den Plattenkörper abgeflacht ist, wobei in der Platte eine Oeffnung (50 oder 40') eingeformt ist, durch welche der Kopf von der einen Seite der Platte her zur andern einführbar ist, wobei der Kopf zwischen dem Lappen und dem Plattenkörper durch den abgeflachten Lappen eingeschlossen ist, und wobei die Anordnung der Verbindungselemente eine gegenseitige Relativbewegung ermöglicht, wenn der Kopf wie oben gesagt eingeschlossen ist.

2. Pneukette nach Anspruch 1, dadurch gekennzeichnet, dass das Verbindungselement (36 oder 28') mit dem Kopf (37 oder 30') am Querelement (18 oder 16') befestigt ist.

3. Pneukette nach Anspruch 1 oder 2, dadurch gekennzeichnet, dass der eingeschlossene Kopf (37, 30') derart ausgebildet ist, dass er ein Verschwenken des Verbindungselementes (34, 36 oder 28', 32') quer zum Pneu ermöglicht, auf welchem die Kette montiert ist (Pfeil B₁).

4. Pneukette nach einem der vorangehenden Ansprüche, dadurch gekennzeichnet, dass der eingeschlossene Kopf (30') derart ausgebildet ist, dass er in seiner eingeschlossenen Stellung eine Schwenkbewegung der Verbindungselemente (28', 32') in Umfangsrichtung des Pneus ermöglicht, auf welchem die Kette montiert ist (Pfeil A₁).

5. Pneukette nach einem der vorangehenden Ansprüche, dadurch gekennzeichnet, dass der Kopf (30') ein im wesentlichen T-förmiges Element mit einem Querbalken (31') umfasst, welcher sich im wesentlichen quer zur Längsachse des Querelementes (16') erstreckt.

6. Pneukette nach Anspruch 5, dadurch gekennzeichnet, dass der Kopf (30') und die Oeffnung (40') derart ausgebildet sind, dass die Einführung des Kopfs in die Oeffnung und die Entfernung des Kopfs von der Oeffnung durch ein gegenseitiges Ausrichten in Längsrichtung des Querbalkens (31') und der Oeffnung ermöglicht wird, wenn der Lappen vom Plattenkörper abgehoben wird.

7. Pneukette nach einem der vorangehenden Ansprüche, dadurch gekennzeichnet, dass das Querelement (18 oder 16') ein Kabel (26 oder 24') ist, wobei das am Querelement befestigte Verbindungselement (36 oder 28') eine auf das Kabel aufgepresste Hülse umfasst.

8. Pneukette nach einem der vorangehenden Ansprüche, dadurch gekennzeichnet, dass sich die Oeffnug (50 oder 40') in den Lappen (48 oder 38') erstreckt.

9. Pneukette nach einem der vorangehenden Ansprüche, dadurch gekennzeichnet, dass die Eingriffsmittel (20 oder 18') Eingriffsbüchsen auf dem Querelement (18 oder 16') umfassen.

10. Pneukette nach Anspruch 1, dadurch gekennzeichnet, dass die ·Anordnung der Verbindungselemente (34 und 36) eine Drehung des Querelementes (18) um seine Längsachse ermöglicht.

11. Pneukette nach Anspruch 10, dadurch gekennzeichnet, dass der Kopf (37) eine gekrümmte Oberfläche hat, welche diese Drehung ermöglicht.

12. Querelement für eine Pneukette aus Kabeln, wobei das Querelement (18 oder 16') ein mit Eingriffsbüchsen (20 oder 18') versehenes Kabel ist, das an seinen gegenüberliegenden Enden Befestigungselemente (36 oder 28') zum Verbinden des Querelementes mit Seitenelementen (12, 14 oder 12') der Kabelkette aufweist, dadurch gekennzeichnet, dass das Befestigungselement in jedem Fall ein Verbindungselement (36 oder 28') umfasst, welches am Ende des Querelements befestigt ist und einen Kopf (37 oder 30') aufweist, der für die Aufnahme in einem am einen Seitenelement befestigten komplementären Verbindungselement (34 oder 32') ausgebildet ist, derart, dass das Querelement relativ zum Seitenelement beweglich ist, und dass jedes komplementäre Verbindungselement (34 oder 32') eine Platte mit Mitteln (46 oder 36') am einen Ende zum Befestigen der Platte am Seitenelement sowie einen umgebogenen Lappen (48 oder 38') am andern Ende umfasst, der eine Oeffnung (50 oder 40') aufweist, durch welche der Kopf von der einen Seite der Platte zur andern einführbar ist, wobei der Lappen gegen der Plattenkörper abgeflacht ist und den Kopf in dem Verbindungselement einschliesst.

13. Querelement nach Anspruch 12, dadurch gekennzeichnet, dass der Kopf (37 oder 30') so ausgebildet ist, dass er im komplementären Verbindungselement (34 oder 32') relativ verschwenkbar ist.

14. Querelement nach Anspruch 12, dadurch gekennzeichnet, dass der Kopf (37) derart ausgebildet ist, dass er im komplementären Verbindungselement (34) um die Längsachse des Querelementes drehbar ist.

*FIG. 1.*

*FIG. 2.*

0 061 306

FIG. 3.

FIG. 4.

FIG. 5.

FIG. 6.

2

0 061 306

FIG. 7.

FIG. 8.

FIG. 9.

3